# EUROPÄISCHE PATENTSCHRIFT

(11) **EP 3 205 680 B1**
(45) Veröffentlichungstag und Bekanntmachung des Hinweises auf die Patenterteilung: **08.08.2018**
(21) Anmeldenummer: 17150966.4
(22) Anmeldetag: 11.01.2017
(51) Int. Cl.: C08G 18/48, C08G 18/76, C08G 18/16, C08G 18/20, C08J 9/12, C08L 75/04

(54) **ALTERUNGSBESTÄNDIGE UND EMISSIONSARME MATRATZEN UND/ODER KISSEN**
AGING-RESISTANT AND LOW-EMISSION MATTRESSES AND/OR CUSHIONS
MATELAS ET/OU COUSSINS À FAIBLE ÉMISSION ET RÉSISTANT AU VIEILLISSEMENT

(30) Priorität: 10.02.2016 EP 16154988
(43) Veröffentlichungstag der Anmeldung: 16.08.2017
(73) Patentinhaber: Evonik Degussa GmbH, 45128 Essen (DE)
(72) Erfinder: Günther, Thomas, 41464 Neuss (DE); Glos, Martin, 46325 Borken (DE); Krebs, Michael, 40217 Düsseldorf (DE)

(56) Entgegenhaltungen:
- WO-A1-2007/144272
- WO-A1-2015/200408
- US-A- 5 756 557

## Beschreibung

Die vorliegende Erfindung liegt auf dem Gebiet der Matratzen und/oder Kissen, insbesondere Matratzen, sowie der Polyurethan-Weichschaumstoffe. Sie betrifft vorzugsweise die Bereitstellung von Matratzen und/oder Kissen, insbesondere Matratzen, die mindestens einen Abschnitt aus Polyurethan-Weichschaumstoff umfassen.

Polyurethanschaum-haltige Matratzen und/oder Kissen sind aus dem Stand der Technik lange bekannt und finden weltweite Verbreitung. Es hat nicht an Versuchen gemangelt, solche Matratze und/oder Kissen immer weiter zu verbessern, beispielsweise um einen optimalen Schlafkomfort zu ermöglichen. Der Optimierungsbedarf ist bis heute nicht erloschen.

Ein konstant auftretendes Problem von Polyurethanschaum-haltigen Matratzen und/oder Kissen bleibt das Alterungsverhalten. Während des Alterungsprozesses, kann bei Matratzen und/oder Kissen eine Materialermüdung auftreten. Hierbei kann sich zum Beispiel die Härte der Matratze und/oder des Kissens lokal oder verteilt über die gesamte Matratze verändern. In den meisten Fällen ist ein Härteverlust zu beobachten. Hierdurch kann es zur Ausbildung von Liegekulen oder zu Härteunterschieden über die gesamte Matratze kommen. Eine schlechte Matratze ist nicht selten der Auslöser für Rückenprobleme, Kopfschmerzen oder Schlafstörungen.

Die Hauptursache für die Materialermüdung ist die Kompression der Matratze und/oder des Kissens während dem Liegen. Hitze, Feuchtigkeit, UV-Strahlung und Oxidations- sowie Abbauprozesse im Matratzenmaterial können den Prozess der Materialermüdung ebenfalls beschleunigen. Dies gilt insbesondere für Matratzen und/oder Kissen, die Polyurethan-Weichschaumstoff enthalten. Insbesondere die Hitzebeständigkeit und/oder Alterungsbeständigkeit der eingesetzten Polyurethanschaumstoffe bei Temperierung (Wärmealterung) bedarf noch einer weiteren Verbesserung. Bei der Herstellung von solchen PU-Weichschaumstoffen werden in der Regel tertiäre Amine als Katalysatoren eingesetzt, insbesondere um die Reaktion zwischen Isocyanat und Polyol und Isocyanat und Wasser zu katalysieren. Solche Verbindungen sind daher im Wesentlichen als essentielle Additive für die Herstellung von PU-Weichschaumstoffen zu betrachten. Viele dieser Amin-Katalysatoren wirken sich aber gewöhnlich negativ auf die Alterungsbeständigkeit von PU-Schäumen aus. Ein weiteres Problem von Polyurethanschaum-haltigen Matratzen und/oder Kissen sind die teilweise hohen Anforderungen an das Emissionsprofil dieser Produkte. Amin-Emissionen liefern oft einen zentralen Beitrag zum Gesamtemissionsprofil. Wiederum sind in den meisten Fällen die Anteile aus Polyurethan-Weichschaumstoff für die Amin-Emissionen dieser Polyurethanschaum-haltigen Matratzen und/oder Kissen verantwortlich. Es bleibt daher eine allgemeine Herausforderung, emissionsarme und alterungsbeständige Polyurethan-Weichschaumstoffe als Bestandteile von Polyurethanschaum-haltigen Matratzen und/oder Kissen herzustellen.

Konkrete Aufgabe der vorliegenden Erfindung war vor diesem Hintergrund die Bereitstellung von Polyurethanschaum-haltigen Matratzen und/oder Kissen, die hinsichtlich Amin-Emissionen besonders emissionsarm sind und gleichzeitig eine besonders gute Alterungsbeständigkeit aufweisen.

"Emissionsarm" hinsichtlich von Aminen umfasst im Sinne der vorliegenden Erfindung insbesondere, dass der Polyurethanweichschaumstoff zur Herstellung von Matratzen und/oder Kissen, vorzugsweise zur Herstellung von Matratzen, eine Amin-Emission von ≥ 0 µg/m³ und ≤ 40 µg/m³, vorzugsweise ≤ 10 µg/m³, besonders bevorzugt ≤ 5 µg/m³, aufweist, entsprechend ermittelt nach dem Prüfkammerverfahren in Anlehnung an die DIN-Norm DIN EN ISO 16000-9:2008-04, 24 Stunden nach Prüfkammerbeladung.

"Alterungsbeständig" umfasst im Sinne der vorliegenden Erfindung insbesondere eine Verbesserung des Alterungsverhaltens, insbesondere der Hitzebeständigkeit und/oder Alterungsbeständigkeit bei Temperierung (Wärmealterung) von Polyurethanweichschaumstoffen. Solche Alterungsphänomene sind oft eng mit der Wahl des Katalysatorsystems zur Herstellung der Polyurethanweichschaumstoffe verknüpft und führen in der Regel zu einer Materialermüdung.

Es wurde im Rahmen dieser Erfindung überraschend gefunden, dass die Lösung dieser Aufgabe vom Gegenstand der Erfindung ermöglicht wird. Gegenstand der Erfindung ist eine Matratze und/oder Kissen, umfassend mindestens einen Abschnitt aus Polyurethan-Weichschaumstoff, wobei der Polyurethan-Weichschaumstoff durch Umsetzung mindestens einer Polyolkomponente und mindestens einer Isocyanatkomponente in Gegenwart der Verbindung der Formel (I) 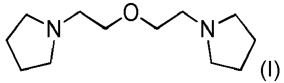 und mindestens eines Treibmittels erhalten wurde. Optional können bei der vorgenannten Umsetzung natürlich vorteilhafterweise auch weitere übliche Additive, Aktivstoffe und Hilfsstoffe zusätzlich eingesetzt werden. Matratzen sind im Sinne dieser Erfindung ganz besonders bevorzugt. Das gilt vorteilhafterweise auch für alle folgenden bevorzugten Ausführungsformen.

Vorteilhafterweise ist der derart unter Einsatz von einer Verbindung der Formel (I) hergestellte Polyurethan-Weichschaumstoff besonders emissionsarm mit Blick auf Amin-Emissionen und gleichzeitig besonders alterungsbeständig, wie insbesondere anhand der Testverfahren wie im Beispielteil angegeben verifizierbar. Mit den erfindungsgemäßen stickstoffhaltigen Verbindung nach der Formel (I) kann die Hitzebeständigkeit und/oder Haltbarkeit der entsprechenden Polyurethanweichschaumstoffe gegenüber Polyurethanweichschaumstoffen, die mit konventionellen Katalysatoren nach dem Stand der Technik hergestellt wurden, vorteilhafterweise verbessert werden. Vorteilhafterweise kann dieser positive Effekt insbesondere bei Polyurethanweichschaumstoffen, bevorzugt Weichblockschaumstoffen, insbesondere im Sinne einer trockenen Wärmealterung nach der DIN-Norm DIN EN ISO 2440/A1:2009-01 beobachtet werden, insbesondere bei einer Temperatur von 70, 100, 120, 125 und/oder 140 °C und einer Alterungsdauer von 2, 4, 16, 22, 24, 48, 72 und/oder 168 Stunden bevorzugt bei 2, 24 und/oder 168 Stunden.

Matratzen an sich und deren Herstellung sind bekannt. Gewöhnlich bestehen sie aus einem Matratzenkern, z.B. umfassend Schaumstoff, Latex, Naturprodukte und/oder Federkern, sowie einem die Matratze umgebenden Bezug. Für Kissen gilt entsprechendes. Dass in der Matratze und/oder in dem Kissen mindestens ein Abschnitt aus Polyurethan-Weichschaumstoff enthalten ist, bedeutet, dass zumindest ein Teil der Matratze und/oder des Kissens aus Polyurethan-Weichschaumstoff oder verschiedenen Polyurethan-Weichschaumstoffen besteht. Bezogen auf das Gesamtgewicht der Matratze und/oder des Kissens kann dieser Teil zumindest 1 Gew.-% oder 5 Gew.-% oder 25 Gew.-%, vorzugsweise mindestens 50 Gew.-%, insbesondere mindestens 75 Gew.-% ausmachen. Es ist auch möglich, dass die Matratze und/oder des Kissen, abgesehen vom Bezug, ganz und gar aus Polyurethan-Weichschaumstoff besteht.

Die Herstellung von Polyurethanschaum ist ebenfalls bekannt. Er entsteht durch die bestens erprobte Umsetzung von mindestens einer Polyolkomponente und mindestens einer Isocyanatkomponente in Gegenwart von mindestens einem Treibmittel (z.B. Wasser) im Sinne einer Polyadditionsreaktion. Für die vorliegende Erfindung ist dabei wesentlich, dass diese Umsetzung in Gegenwart der Verbindung der Formel (I) 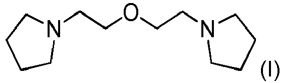 erfolgt.

Der von der Matratze und/oder dem Kissen umfasste Polyurethan-Weichschaumstoff ist gemäß einer bevorzugten Ausführungsform der Erfindung ein Polyurethan-Heißweichschaum, ein Polyurethan-Kaltweichschaum oder ein viskoelastischer Polyurethanweichschaum, oder es wird eine Kombination dieser Weichschaumstoffe verwendet, z.B. zweier oder dreier dieser Weichschaumstoffe. Die Differenzierung in die vorgenannten Weichschaumtypen ist dem Fachmann an sich bekannt, es handelt sich um feststehende technische Begriffe, die in der Fachwelt entsprechend etabliert sind, sei aber hier dennoch kurz erläutert.

Der entscheidende Unterschied zum Heißweichschaum besteht bei der Kaltweichschaumherstellung darin, dass zum einen hochreaktive Polyole und optional auch niedermolekulare Vernetzer eingesetzt werden, wobei die Funktion des Vernetzers auch durch höherfunktionelle Isocyanate übernommen werden kann. Somit kommt es bereits in der Expansionsphase (CO₂-Bildung aus -NCO und H₂O) des Schaums zu der Reaktion der Isocyanatgruppen mit den Hydroxylgruppen. Diese schnelle Polyurethanreaktion führt über Viskositätsanstieg gewöhnlich zu einer relativ hohen Eigenstabilität des Schaums während des Treibvorgangs. Bei Polyurethankaltweichschaumstoffen handelt es sich gewöhnlich um hochelastische Schäume, bei denen die Randzonenstabilisierung eine große Rolle spielt. Aufgrund der hohen Eigenstabilität sind die Zellen am Ende des Schäumvorgangs in der Regel nicht genügend geöffnet und es muss noch mechanisch aufgedrückt werden. Hierbei gibt die notwendige Aufdrückkraft ("force to crush" (FTC)) ein Maß für die Offenzelligkeit. Wünschenswert sind gewöhnlich Schäume mit hoher Offenzelligkeit, die lediglich geringe Aufdruckkräfte benötigen. Bei der Formverschäumung werden Polyurethankaltweichschäume im Gegensatz zu Polyurethanheißweichschäumen bei einer Temperatur, beispielsweise von ≤ 90 °C, hergestellt.

Offenzellige Polyurethanweichschaumstoffe weisen gewöhnlich eine Gasdurchlässigkeit (auch "Porosität" genannt) in einem Bereich von 1 bis 250 mm Wassersäule, insbesondere in einem Bereich von 1 bis 50 mm Wassersäule (vorzugsweise bestimmt durch Messung der Druckdifferenz bei der Durchströmung einer Schaumprobe) auf. Hierfür wird z.B. eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluss wird auf der Schaumplatte platziert. Über die zentrale Bohrung wird ein Luftstrom von 8 l/min in die Schaumprobe geleitet. Je geschlossener der Schaum ist, desto mehr Druck wird aufgebaut und desto mehr wird der Spiegel der Wassersäule nach unten gedrückt und desto größere Werte werden gemessen.

Heißweichschaumstoffe besitzen je nach Anwendung gewöhnlich ein Raumgewicht zwischen 8 und 80 kg/m³. Kaltweichschaumstoffe, insbesondere für die Produktion hochwertiger Matratzen, werden üblicherweise in einem Dichtebereich von 25 - 80 kg/m³ produziert. Hierbei wird insbesondere bei der Verwendung solcher Schaumstoffe als Matratzen, Matratzenbestandteile und/oder Kissen nach regionalen Bedürfnissen, Anforderungen und Vorlieben der Verbraucher unterschieden.

Ein wesentliches Merkmal von Kaltweichschaumstoffen ist die Rückprallelastizität, auch "ball rebound" (BR) oder "resilience" genannt. Ein Verfahren zur Bestimmung der Rückprallelastizität ist beispielsweise in der DIN EN ISO 8307:2008-03 beschrieben. Hierbei wird eine Stahlkugel mit festgelegter Masse aus einer bestimmten Höhe auf den Probenkörper fallen gelassen und dann die Höhe des Rückpralls in % der Abwurfhöhe gemessen. Typische Werte für einen Kaltweichschaum liegen gewöhnlich im Bereich von ≥ 55 %. Kaltweichschaumstoffe werden daher auch oft als HR-Schäume bezeichnet (HR: High Resilience). Demgegenüber weisen Polyurethanheißweichschaumstoffe Rückprall-Werte von gewöhnlich 15 % bis maximal 60 % auf.

Eine spezielle Klasse der Polyurethanschaumstoffe ist die der viskoelastischen Schaumstoffe. Diese sind auch unter dem Namen Memory Foam (zu Deutsch etwa "Schaum mit Erinnerungsvermögen") bekannt und zeichnen sich sowohl durch eine geringe Rückprallelastizität (vorzugsweise < 10%) als auch durch eine langsame, graduelle Rückverformung nach einer erfolgten Kompression aus (Rückverformungszeit vorzugsweise 2 - 10 s). Solche Materialien sind im Stand der Technik wohlbekannt und werden insbesondere auch wegen ihrer energie- und schallabsorbierenden Eigenschaften sehr geschätzt. Typische viskoelastische Schaumstoffe haben gewöhnlich eine geringere Porosität und eine hohe Dichte (bzw. ein hohes Raumgewicht (RG)) verglichen mit konventionellen Polyurethanweichschaumstoffen. Kissen liegen mit einem Raumgewicht von gewöhnlich 30 - 50 kg/m³ am unteren Ende der für viskoelastische Schaumstoffe typischen Dichteskala, wohingegen Matratzen gewöhnlich eine Dichte im Bereich von 60- 130 kg/m³ aufweisen.

In konventionellen Polyurethanschaumstoffen ordnen sich die harten (hohe Glasübergangstemperatur) und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man auch von "phasenseparierten" Materialien. Viskoelastische Polyurethanschaumstoffe stellen in diesem Zusammenhang einen Spezialfall dar, bei welchem die oben beschriebene Phasentrennung nur unvollständig oder überhaupt nicht auftritt. Die Glastemperatur liegt bei viskoelastischen Schaumstoffen vorzugsweise zwischen -20 und +15 °C, die Glasübergangstemperatur von Polyurethanheißweichschaumstoffen und Polyurethankaltweichschaumstoffen dagegen gewöhnlich bei unter -35°C. Von solcher "Struktur-Viskoelastizität", die im Wesentlichen auf der Glastemperatur des Polymers beruht, bei Polyurethanschäumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Durch die geringe Größe der Öffnungen strömt die Luft nach einer Kompression nur langsam wieder ein, was eine verlangsamte Rückverformung zur Folge hat.

Verschiedene Polyurethanweichschaumstoffe werden neben dem Raumgewicht oft nach ihrer Stauchhärte, auch Tragfähigkeit genannt, für bestimmte Anwendungen eingestuft. So liegt die Stauchhärte CLD (Compression Load Deflection), 40 % nach DIN EN ISO 3386-1:2015-10 für Polyurethanheißweichschaumstoffe üblicherweise im Bereich von 2,0 - 8,0 kPa. Kaltweichschaumstoffe weisen in der Regel Werte von 2,0 bis 5,0 kPa, insbesondere von 2,5 bis 4,5 kPa auf, viskoelastische Polyurethanschaumstoffe üblicherweise Werte von 0,1 - 5,0 kPa, insbesondere 0,5 - 2,0 kPa.

Gemäß einer bevorzugten Ausführungsform der Erfindung weisen die erfindungsgemäß einzusetzenden Polyurethan-Weichschaumstoffe folgende bevorzugte Eigenschaften hinsichtlich Rückprallelastizität, Raumgewicht und/oder Porosität (ggf. nach Aufdrücken der Schäume, wie insbesondere beim Polyurethan-Kaltweichschaum) auf, nämlich eine Rückprallelastizität von 1 bis 80 %, gemessen nach DIN EN ISO 8307:2008-03, und/oder ein Raumgewicht von 5 bis 150 kg/m³ und/oder eine Porosität von 1 bis 250, insbesondere 1 bis 50 mm Wassersäule. Besonders bevorzugt sind alle 3 Kriterien bezüglich Rückprallelastizität, Raumgewicht und/oder Porosität, wie eben beziffert, erfüllt. Insbesondere weist der erfindungsgemäß eingesetzte Polyurethan-Weichschaumstoff eine Stauchhärte CLD, 40 % nach DIN EN ISO 3386-1:2015-10 von 0,1 bis 8,0 kPa auf.

Polyurethan-Heißweichschaum, Polyurethan-Kaltweichschaum oder viskoelastischer Polyurethanweichschaum sowie deren Herstellung sind an sich bekannt. Polyurethan-Heißweichschaum zeichnet sich im Sinne dieser Erfindung insbesondere dadurch aus, dass er eine Stauchhärte CLD, 40 % nach DIN EN ISO 3386-1:2015-10 von 2,0 - 8,0 kPa, und/oder eine Rückprallelastizität von 15 - 60 %, gemessen nach DIN EN ISO 8307:2008-03, und/oder ein Raumgewicht von 8 bis 80 kg/m³ und/oder eine Porosität von 1 bis 250, insbesondere 1 bis 50 mm Wassersäule hat. Eine Möglichkeit der Herstellung wird z.B. in EP 2 481 770 A2 oder EP 2 182 020 A1 beschrieben. Polyurethan-Kaltweichschaum zeichnet sich im Sinne dieser Erfindung insbesondere dadurch aus, dass er eine Stauchhärte CLD, 40 % nach DIN EN ISO 3386-1:2015-10 von 2,0 - 5,0 kPa, insbesondere von 2,5 - 4,5 kPa, und/oder eine Rückprallelastizität von ≥ 55 %, gemessen nach DIN EN ISO 8307:2008-03, und/oder ein Raumgewicht von 25 bis 80 kg/m³ und/oder eine Porosität (nach Aufdrücken des Schaumes) von 1 bis 250, insbesondere 1 bis 50 mm Wassersäule hat. Eine Möglichkeit der Herstellung wird z.B. in EP 1777252 B1 beschrieben. Viskoelastischer Polyurethanweichschaum zeichnet sich im Sinne dieser Erfindung insbesondere dadurch aus, dass er eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 2,0 kPa, und/oder eine Rückprallelastizität von < 10 %, gemessen nach DIN EN ISO 8307:2008-03, und/oder ein Raumgewicht von 30 bis 130 kg/m³ und/oder eine Porosität (nach Aufdrücken des Schaumes) von 1 bis 250, insbesondere 1 bis 50 mm Wassersäule hat. Eine Möglichkeit der Herstellung wird z.B. in WO 2013/131710 A2 beschrieben. Gemessen werden kann die Glasübergangstemperatur dabei mittels Dynamisch Mechanischer Analyse (DMA) (DIN 53513:1990-03) oder mittels Differentieller Kalorimetrie (DSC) (ISO 11357-2:2013). Dabei handelt es sich genau genommen um einen Glasübergangsbereich, der sich über einen Temperaturbereich erstreckt.

Die erfindungsgemäße Matratze weist im Rahmen einer bevorzugten Ausführungsform der Erfindung eine Höhe von mindestens 1 cm bis maximal 50 cm, sowie eine Breite von mindestens 20 cm bis maximal 300 cm auf, sowie eine Länge von mindestens 20 cm bis maximal 300 cm. Bevorzugte Maße sind z.B. Höhen im Bereich von 5 cm bis 40 cm, Breiten im Bereich von 70 cm bis 200 cm, Längen im Bereich von 150 cm bis 220 cm. Das erfindungsgemäße Kissen weist im Rahmen einer bevorzugten Ausführungsform der Erfindung eine Höhe von mindestens 1 cm bis maximal 40 cm, sowie eine Breite von mindestens 15 cm bis maximal 200 cm auf, sowie eine Länge von mindestens 15 cm bis maximal 200 cm. Bevorzugte Maße sind z.B. Höhen im Bereich von 2 cm bis 30 cm, Breiten im Bereich von 15 cm bis 50 cm, Längen im Bereich von 15 cm bis 50 cm.

Gemäß einer weiteren bevorzugten Ausführungsform der Erfindung ist sie als Mehrzonen-Matratze ausgebildet. Die unterschiedlichen Zonen unterscheiden sich dabei insbesondere durch die jeweilige Härte. Solche Mehrzonen-Matratzen und deren Herstellung sind an sich bekannt. Sie werden breit kommerziell vertrieben. Insbesondere weist die Matratze bis zu sieben Zonen unterschiedlicher Härte auf, die sich über die Matratzenlängsrichtung erstrecken und in der entsprechenden Breite ausgeführt sind. Wenn die Matratze über ihre Fläche verteilt verschiedene Härtezonen aufweist, die insbesondere durch Einschnitte und/oder Hohlräume in der Matratze gebildet sind, so liegt eine weitere bevorzugte Ausführungsform der Erfindung vor.

Nach einer weiteren bevorzugten Ausführungsform der Erfindung kann es sich bei der erfindungsgemäßen Matratze um eine Polyurethan-Kaltschaummatratze, eine viskoelastische Polyurethanweichschaum-Matratze, eine Polyurethan-Heißschaummatratze, eine Polyurethan-Gelschaum-Matratze, eine Latexmatratze oder eine Boxspring-Matratze handeln. Diese Matratzentypen sind an sich dem Fachmann bekannt und werden unter diesen Bezeichnungen auch weltweit vermarktet. Heißschaummatratzen werden am Markt gewöhnlich vereinfacht als Schaumstoffmatratzen bezeichnet. Der erfindungsgemäße Begriff der Matratze umfasst im Sinne dieser Erfindung auch entsprechende Matratzenauflagen und - unterlagen.

Die Bereitstellung der diversen im Rahmen dieser Erfindung einsetzbaren PUR-Schäume ist an sich bekannt und es kann auf alle bewährten Verfahren zurückgegriffen werden, mit der Besonderheit, dass die PUR-Schaum-Herstellung in Gegenwart der Verbindung der Formel (I) erfolgt. Die Herstellung entsprechender PUR-Schäume bedarf an sich keiner weiteren Erläuterung mehr, dennoch werden im Folgenden einige bevorzugte Details zur Herstellung des erfindungsgemäß eingesetzten PUR-Schaums genannt. Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Als Polyurethane werden hier alle Reaktionsprodukte ausgehend von Isocyanaten, insbesondere von Polyisocyanaten, und entsprechend isocyanat-reaktiven Molekülen verstanden. Dies umfasst unter anderem auch Polyisocyanurate, Polyharnstoffe sowie Allophanat-, Biuret-, Uretdion-, Uretimin- oder Carbodiimid-enthaltende Isocyanat- oder Polyisocyanat-Reaktionsprodukte. Es versteht sich von selbst, dass der Fachmann zur Herstellung der unterschiedlichen Polyurethanweichschaumstoffe, beispielsweise von Heiß-, Kalt-, oder viskoelastischen Polyurethanweichschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere Polyurethanschaum-Typ, zu erhalten. Weitere Angaben zu den verwendeten Ausgangsstoffen, Katalysatoren sowie Hilfs- und Zusatzstoffen finden sich beispielsweise im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind lediglich beispielhaft genannt und können durch andere dem Fachmann bekannte Stoffe ersetzt und/oder ergänzt werden.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexa-hydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Schaumstoffen; üblicherweise verwendeten Polyetherpolyole und/oder Polyesterpolyole und/oder hydroxyl-gruppenhaltigen aliphatischen Polycarbonate, insbesondere Polyetherpolycarbonatpolyole und/oder Füllkörperpolyole (Polymerpolyole) wie SAN-, PHD- und PIPA-Polyole, die sich dadurch auszeichnen, dass sie feste organische Füllstoffe bis zu einem Feststoffgehalt von 40 % oder mehr in disperser Verteilung enthalten, und/oder autokatalytische Polyole, die katalytisch aktive funktionelle Gruppen, insbesondere Amino-Gruppen, enthalten, und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden. Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6359022 oder WO 96/12759. Weitere Polyole sind dem Fachmann bekannt und können zum Beispiel der EP-A-0380993 oder US-A-3346557 entnommen werden.

Gemäß einer bevorzugten Ausführungsform der Erfindung, insbesondere zur Herstellung von Form- und hochelastischen Weichschaumstoffen, werden zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Je nach den geforderten Eigenschaften dieser erfindungsgemäß bevorzugten Ausführungsform, insbesondere zur Herstellung der oben genannten Schaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 %. Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 2500 bis 15000, bevorzugt 4500 bis 12000 und üblicherweise OH-Zahlen im Bereich von 5 bis 80, vorzugsweise 20 bis 50 mgKOH/g.

Gemäß einer weiteren bevorzugten Ausführungsform der Erfindung, insbesondere zur Herstellung von Blockweichschaumstoffen, werden zwei- und/oder dreifunktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 8000, vorzugsweise 800 bis 5000, besonders bevorzugt 2500 bis 4500 und üblicherweise OH-Zahlen im Bereich von 10 bis 100, vorzugsweise 20 bis 60 mgKOH/g.

Gemäß einer weiteren bevorzugten Ausführungsform der Erfindung, insbesondere zur Herstellung von Form- und hochelastischen Weichschaumstoffen, werden autokatalytische Polyole eingesetzt.

Gemäß einer weiteren bevorzugten Ausführungsform der Erfindung, insbesondere zur Herstellung von viskoelastischen Polyurethan-Schaumstoffen, werden vorzugsweise Gemische verschiedener, bevorzugt zweier oder dreier, mehrfunktioneller Polyesteralkohole und/oder Polyetheralkohole eingesetzt. Üblicherweise bestehen hier die eingesetzten Polyol-Kombinationen aus einem niedermolekularen "Crosslinker"-Polyol mit hoher Funktionalität, vorzugsweise mit einer OH-Zahl von 100 bis 270 mg KOH/g, und/oder einem konventionellen hochmolekularen Blockweichschaum- oder HR-Polyol und/oder einem "Hypersoft"-Polyetherpolyol, vorzugsweise mit einer OH-Zahl von 20 bis 40 mg KOH/g, mit hohem Anteil an Ethylenoxid und mit zellöffnenden Eigenschaften.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350, besonders bevorzugt 70 bis 140. Ein Index von 100 steht für ein molares Verhältnis der reaktiven Gruppen von 1 zu 1.

Je nach Anwendung kann es erfindungsgemäß bevorzugt sein, dass neben der erfindungs-gemäßen Verbindung nach der Formel (I) zusätzliche Katalysatoren eingesetzt werden.

Der Ausdruck "zusätzliche Katalysatoren" umfasst im Sinne dieser Erfindung alle Verbindungen nach dem Stand der Technik, die in der Lage sind Isocyanat-Reaktionen zu katalysieren und/oder bei der Herstellung von Polyisocyanat-Reaktionsprodukten, insbesondere von Polyurethanschaumstoffen, als Katalysatoren, Co-Katalysatoren oder Aktivatoren eingesetzt werden.

Geeignete zusätzliche Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und AmmoniumSalze, und/oder metallhaltige Verbindungen.

Beispiele für geeignete zusätzliche stickstoffhaltige Verbindungen als Katalysatoren im Sinne der vorliegenden Erfindung sind die Amine Triethylamin, N,N-Dimethylcyclohexylamin, N,N-Dicyclohexylmethylamin, N,N-Dimethylaminoethylamin, N,N,N',N'-Tetramethylethylen-1,2-diamin, N,N,N',N'-Tetramethylpropylen-1,3-diamin, N,N,N',N'-Tetramethyl-1,4-butandiamin, N,N,N',N'-Tetramethyl-1,6-hexandiamin, N,N,N',N",N"-Pentamethyldiethylentriamin, N,N,N'-Trimethylaminoethylethanolamin, N,N-Dimethylaminopropylamin, N,N-Diethylaminopropyl-amin, 1-(2-Aminoethyl)pyrrolidin, 1-(3-Aminopropyl)pyrrolidin, N,N-Dimethylaminopropyl-N',N'-dipropan-2-olamin, 2-[[3-(dimethylamino)propyl]methylamino]ethanol, 3-(2-Dimethyl-amino)ethoxy)propylamin, N,N-Bis[3-(dimethylamino)propyl]-amin, N,N,N',N",N"-Penta-methyldipropylentriamin, 1-[Bis[3-(dimethylamino)propyl]amino]-2-propanol, N,N-Bis[3-(dimethylamino)propyl]-N',N'-dimethylpropan-1,3-diamin, Triethylendiamin, 1,4-Diazabicyclo-[2.2.2]octane-2-methanol, N,N'-Dimethylpiperazin, 1,2-Dimethylimidazol, N-(2-Hydroxy-propyl)imidazol, 1-Isobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Amino-ethyl)piperazin, N,N-Dimethylbenzylamin, N,N-Dimethylaminoethanol, N,N-Diethylamino-ethanol, 1-(2-Hydroxyethyl)pyrrolidin, 3-Dimethylamino-1-propanol, 1-(3-Hydroxypropyl)pyrrolidin, N,N-Dimethylaminoethoxyethanol, N,N-Diethylaminoethoxy-ethanol, Bis(2-Dimethylaminoethylether), N,N,N'-Trimethyl-N'-(2-hydroxyethyl)bis(2-amino-ethyl)ether, N,N,N'-Trimethyl-N-3'-aminopropyl(bisaminoethyl)ether, Tris(dimethylamino-propyl)hexahydro-1,3,5-triazin, 1,8-Diazabicyclo[5.4.0]undec-7-en, 1,5-Diazabicyclo-[4.3.0]non-5-en, 1,5,7-triazabicyclo[4.4.0]dec-5-en, N-Methyl-1,5,7-triazabicyclo[4.4.0]dec-5-en, 1,4,6-triazabicyclo[3.3.0]oct-4-en, 1,1,3,3-Tetramethylguanidin, tert-Butyl-1,1,3,3-Tetra-methylguanidin, Guanidin, 3-Dimethylaminopropylharnstoff, 1,3-Bis[3-(dimethylamino)propyl]-harnstoff, Bis-N,N-(dimethylaminoethoxyethyl)isophorondicarbamat, 3-Dimethylamino-N,N-dimethylpropionamid und 2,4,6-Tris(dimethylaminomethyl)phenol. Geeignete zusätzliche stickstoffhaltige Katalysatoren, nach dem Stand der Technik, können zum Beispiel von der Firma Evonik unter dem Handelsnamen TEGOAMIN® bezogen werden.

Geeignete metallhaltige Verbindungen als zusätzliche Katalysatoren können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe. Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) be-zeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbin-dungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe). Geeignete metallhaltige Verbindungen, insbesondere wie oben definiert, als zusätzliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallhaltige Koordinationsverbindungen sind zum Beispiel alle Metall-Acetylacetonate wie Nickel(II)-acetylacetonat, Zink(II)-acetylacetonat, Kupfer(II)-acetylacetonat, Molybdändioxoacetylacetonat, alle Eisen-acetylacetonate, alle Cobalt-acetylacetonate, alle Zirconium-acetylacetonate, alle Titan-acetylacetonate, alle Bismuth-acetylacetonate und alle Zinn-acetylacetonate. Besonders geeignete metallorganische Salze und organische Metallsalze, insbesondere wie oben definiert, als zusätzliche Katalysatoren im Sinne der vorliegenden Erfindung sind zum Beispiel Organozinn-, Zinn-, Zink-, Bismuth und Kalium-Salze, insbesondere entsprechende Metall-Carboxylate, -Alkoholate, -Thiolate und - Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercaptoacetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zink(II)-acetat, Zink(II)-2-ethyl-hexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kalium-ricinoleat. Geeignete zusätzliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Neben zusätzlichen Aminen und metallhaltigen Verbindungen können auch Ammoniumsalze als zusätzliche Katalysatoren eingesetzt werden. Geeignet sind zum Beispiel Ammoniumformiat und/oder Ammoniumacetat.

Geeignete zusätzliche Katalysatoren sind beispielsweise in DE 102007046860, EP 1985642, EP 1985644, EP 1977825, US 2008/0234402, EP 0656382 B1 und US 2007/0282026 A1 und den darin zitierten Patentschriften genannt.

Geeignete Einsatzmengen an zusätzlichen Katalysatoren richten sich nach dem Typ des Katalysators und liegen vorzugsweise im Bereich von 0,01 bis 10,0 pphp, besonders bevorzugt im Bereich von 0,02 bis 5,00 pphp (= Gewichtsteile bezogen auf 100 Gewichtsteile Polyol) bzw. 0,10 bis 10,0 pphp für Kaliumsalze.

Die Verbindung der Formel (I) kann zum Beispiel mit geeigneten Lösungsmitteln und/oder weiteren Zusatzstoffen eingesetzt werden. Als optionale Lösungsmittel kommen alle nach dem Stand der Technik geeigneten Substanzen in Frage. Je nach Anwendung können aprotisch-unpolare, aprotisch-polare und protische Lösungsmittel eingesetzt werden. Geeignete aprotisch-unpolare Lösungsmittel können beispielsweise ausgewählt werden aus folgenden Substanzklassen, bzw. Substanzklassen enthaltend folgende funktionelle Gruppen: aromatische Kohlenwasserstoffe, aliphatische Kohlenwasserstoffe (Alkane (Paraffine) und Olefine), Carbonsäurester und Polyester, (Poly)Ether und/oder halogenierte Kohlenwasserstoffe niedriger Polarität. Geeignete aprotisch-polare Lösungsmittel können beispielsweise ausgewählt werden aus folgenden Substanzklassen, bzw. Substanzklassen enthaltend folgende funktionelle Gruppen: Ketone, Lactone, Lactame, Nitrile, Carbonsäureamide, Sulfoxide und/oder Sulfone. Geeignete protische Lösungsmittel können beispielsweise ausgewählt werden aus folgenden Substanzklassen, bzw. Substanzklassen enthaltend folgende funktionelle Gruppen: Alkohole, Polyole, (Poly-)Alkylenglykole, Amine, Carbonsäuren, insbesondere Fettsäuren und/oder primäre und sekundäre Amide. Besonders bevorzugt sind Lösungsmittel sind Verbindungen, die in der Verschäumung problemlos verarbeitet werden können und die Eigenschaften des Schaums nicht negativ beeinflussen. So sind zum Beispiel Isocyanat-reaktive Verbindungen geeignet, da diese mit in die Polymermatrix einreagieren und keine Emissionen im Schaum generieren. Beispiele sind OH-funktionelle Verbindungen wie (Poly-)Alkylenglykole, vorzugsweise Monoethylen-glycol (MEG oder EG), Diethylenglycol (DEG), Triethylenglycol (TEG), 1-2-Propylen-glycol (PG), Dipropylenglycol (DPG), Trimethylenglycol (1,3-Propandiol PDO), Tetramethylenglycol (Butandiol BDO), Butyldiglycol (BDG), Neopentylglycol, 2-Methyl-1,3-propan-diol (Ortegol CXT) und höhere Homologe davon wie zum Beispiel Polyethylenglykol (PEG) mit mittleren Molekülmassen zwischen 200 und 3000. Weitere besonders bevorzugte OH-funktionelle Verbindungen sind Polyether mit mittleren Molekülmassen von 200 bis 4500, insbesondere 400 bis 2000, hierin bevorzugt Wasser-, Allyl-, Butyl- oder Nonyl-gestartete Polyether, insbesondere solche, die auf Propylenoxid- (PO) und/oder Ethylenoxid-blöcken (EO) basieren.

Wird die Verbindung nach der Formel (I) eingesetzt, oder vorgemischte Katalysatorkombinationen der Verbindung der Formel (I) mit zusätzlichen Katalysatoren, gelöst oder in Kombination mit einem Lösungsmittel eingesetzt, beträgt das Massenverhältnis der Summe aller Katalysatoren zum Lösungsmittel vorzugsweise von 100 zu 1 bis 1 zu 4, bevorzugt von 50 zu 1 bis 1 zu 3 und besonders bevorzugt von 25 zu 1 bis 1 zu 2.

Als optionale Zusatzstoffe können alle nach dem Stand der Technik bekannten Substanzen verwendet werden, die bei der Herstellung von Polyurethanen, insbesondere von Polyurethanschaum-stoffen, Verwendung finden, wie zum Beispiel Treibmittel, vorzugsweise Wasser zur Bildung von CO₂ und, falls nötig, weitere physikalische Treibmittel, Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, Puffersubstanzen und/oder zusätzliche katalytisch aktive Substanzen, insbesondere wie oben definiert.

Bei der Herstellung von Polyurethanweichschaumstoffen wird in der Regel Wasser als Treibmittel eingesetzt. Vorzugsweise wird so viel Wasser eingesetzt, dass die Wassermenge 0,10 bis 25,0 pphp beträgt (pphp = Gewichtsteile bezogen auf 100 Gewichtsteile Polyol).

Es können auch geeignete physikalische Treibmittel eingesetzt werden. Dies sind beispielsweise verflüssigtes CO2, und leichtflüchtige Flüssigkeiten, beispielsweise Kohlenwasserstoffe mit 3, 4 oder 5 Kohlenstoff-Atomen, bevorzugt cyclo-, iso- und n-Pentan, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Als optionale Vernetzer und optionale Kettenverlängerer werden niedermolekulare, gegenüber Isocyanaten reaktive, mehrfunktionelle Verbindungen bezeichnet. Geeignet sind zum Beispiel Hydroxyl- oder Aminterminierte Substanzen wie Glycerin, Neopentylglycol, 2-Methyl-1,3-propandiol, Triethanolamin (TEOA), Diethanolamin (DEOA) und Trimethylolpropan. Die Einsatzkonzentration liegt üblicherweise zwischen 0,1 und 5 Teilen, bezogen auf 100 Teile Polyol, kann aber je nach Formulierung auch davon abweichen. Bei der Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Geeignete optionale Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl- und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone.

Geeignete optionale Flammschutzmittel im Sinne dieser Erfindung sind alle Substanzen, die nach dem Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Zur Beeinflussung der Schaumeigenschaften von Polyurethanschäumen können bei deren Herstellung insbesondere Siloxane bzw. organomodifizierte Siloxane optional eingesetzt werden, wobei die im Stand der Technik genannten Substanzen verwendet werden können. Vorzugsweise werden solche Verbindungen eingesetzt, die für die jeweiligen Schaumtypen (Hartschäume, Heissweichschäume, viskoelastische Schäume, Esterschäume, Kaltweichschäume (HR-Schäume), halbharte Schäume) besonders geeignet sind. Geeignete (organomodifizierte) Siloxane sind beispielsweise in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben.

Als optionale (Schaum-)stabilisatoren können alle aus dem Stand der Technik bekannten Stabilisatoren eingesetzt werden. Bevorzugt werden Schaumstabilisatoren auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Stabilisatoren, insbesondere Schaumstabilisatoren sind unter anderem in US 2834748, US2917480 sowie in US3629308 beschrieben. Geeignete Stabilisatoren können von der Evonik Industries AG unter dem Handelsnamen TEGOSTAB® bezogen werden.

Die Siloxane können im Rahmen der vorliegenden Erfindung (insbesondere im Rahmen der erfindungsgemäßen Verwendung) auch als Teil von Zusammensetzungen mit verschiedenen Trägermedien eingesetzt werden. Als Trägermedien kommen beispielweise Glykole, wie beispielsweise Monoethylenglycol (MEG), Diethylenglycol (DEG), Propylenglycol (PG) oder Dipropylenglycol (DPG), Alkoxylate oder Öle synthetischer und/oder natürlicher Herkunft in Frage.

Bevorzugt kann der Zusammensetzung zur Herstellung von Polyurethanschaumstoffen so viel der Siloxane zugegeben, dass der Massenanteil der Siloxane am fertigen Polyurethanschaum von 0,01 bis 10 Gew.-%, bevorzugt von 0,1 bis 3 Gew.-% beträgt.

Es kann vorteilhaft sein, wenn bei der Herstellung des Polyurethanweichschaums eine Zusammensetzung hergestellt und/oder eingesetzt wird, die zumindest eine erfindungsgemäße Verbindung nach der Formel (I), zumindest eine Polyolkomponente, ggf. zumindest eine Isocyanatkomponente sowie optional ein oder mehrere Treibmittel aufweist, und diese Zusammensetzung reagiert wird. Besonders bevorzugt werden solche Zusammensetzungen eingesetzt, die die oben bei der Verwendung beschriebenen Stoffe bzw. Komponenten zur Herstellung von Polyurethanweichschaumstoffen, insbesondere von solchen Heiß-, Kalt- und viskoelastischen Schaumstoffen aufweisen.

Die erfindungsgemäße Verbindung nach der Formel (I) umfasst im Sinne dieser Erfindung ausdrücklich auch die entsprechend quaternisierten und/oder protonierten Verbindungen. Der Einsatz der Verbindung nach der Formel (I), die nicht quaternisiert oder protoniert sind, ist im Sinne dieser Erfindung allerdings besonders bevorzugt. Zur möglichen Quaternisierung der Verbindung der Formel (I) können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden. Die Verbindung der Formel (I) kann, sofern quaternisiert, einfach oder mehrfach quaternisiert sein. Vorzugsweise ist die Verbindung der Formel (I) nur einfach quaternisiert. Bei einfacher Quaternisierung ist die Verbindung der Formeln (I) vorzugsweise an einem Stickstoffatom quaternisiert, welches Teil eines Ringes, bevorzugt eines Pyrrolidin-Ringes, ist. Die Verbindung der Formel (I) kann durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte PolyurethanReaktion erzielt werden soll oder wenn das Reaktionsgemisch bei der Anwendung ein verbessertes Fließverhalten haben soll. Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Bor-basierende Säuren eingesetzt werden.

Das molare Verhältnis der Gesamtmenge der stickstoffhaltigen Katalysatoren, umfassend die Verbindung nach der Formel (I) sowie zusätzliche Amin-Katalysatoren, gegenüber der Gesamtmenge der mit Isocyanaten reaktiven Gruppen der Polyolkomponente beträgt dabei vorzugsweise von 4 x 10⁻⁴ zu 1 bis 0,2 zu 1.

Es ist bevorzugt, dass die stickstoffhaltige Verbindung nach der Formel (I) in Gesamtmenge in einem Massenanteil von 0,01 bis 20,0 Teilen (pphp), bevorzugt 0,01 bis 5,00 Teilen und besonders bevorzugt 0,02 bis 3,00 Teilen bezogen auf 100 Teile (pphp) Polyolkomponente eingesetzt werden.

Die Produktion der erfindungsgemäßen Polyurethanschaumstoffen kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Dabei können diskontinuierliche Verfahren oder kontinuierliche Verfahren zum Einsatz kommen.

Es können alle dem Fachmann bekannten Verfahren zur Herstellung von Polyurethanschaumstoffen verwendet werden. So kann zum Beispiel der Schäumungsprozess sowohl in horizontaler als auch in vertikaler Richtung, in diskontinuierlichen oder kontinuierlichen Anlagen erfolgen. Ebenso können die erfindungsgemäß eingesetzten Zusammensetzungen für die CO2-Technologie benutzt werden. Die Verwendung in Niederdruck- und Hochdruckmaschinen ist möglich, wobei die zu verarbeitenden Zusammensetzungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Ein ganz besonders bevorzugter Polyurethanweichschaumstoff im Sinne dieser Erfindung weist insbesondere die folgende Zusammensetzung auf:

| Komponente | Gewichtsanteile (pphp) |
|---|---|
| Polyol | 100 |
| (Amin-)Katalysator | 0,05 bis 5 |
| Zinn-Katalysator | 0 bis 5, vorzugsweise 0,001 bis 2 |
| Kalium-Katalysator | 0 bis 10 |
| Siloxan | 0,1 bis 15, vorzugsweise 0,2 bis 7 |
| Wasser | 0 bis < 25, vorzugsweise 0,1 bis 15 |
| Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 15 |

Ein weiterer Gegenstand der vorliegenden Erfindung liegt in der Verwendung von Polyurethan-Weichschaumstoff in Matratzen und/oder Kissen, insbesondere Matratzen, wobei der Polyurethan-Weichschaumstoff durch Umsetzung mindestens einer Polyolkomponente und mindestens einer Isocyanatkomponente in Gegenwart der Verbindung der Formel (I) 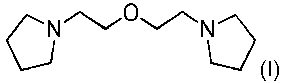 erhalten wurde. Hierzu sei insbesondere auf die vorangegangenen Ausführungen verwiesen, die auch für diesen Gegenstand Gültigkeit haben.

Die erfindungsgemäße Verwendung ermöglicht die Bereitstellung von Matratzen und/oder Kissen mit verbesserter Alterungsbeständigkeit und verbessertem Emissionsverhalten.

### Beispiele

### Physikalische Eigenschaften der Polyurethanweichschaumstoffe:

Die hergestellten Polyurethanweichschäume wurden anhand folgender physikalischer Eigenschaften beurteilt:
a) Rücksacken des Schaumstoffes nach dem Ende der Steigphase (=Rückfall): Der Rückfall, bzw. das Nachsteigen ergibt sich aus der Differenz der Schaumhöhe nach direktem Abblasen und nach 3 Minuten. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe: Die Endhöhe des Schaums wird dadurch bestimmt, dass der Rückfall bzw. das Nachsteigen von bzw. zu der Schaumhöhe nach dem Abblasen subtrahiert bzw. addiert wird. Die Schaumhöhe wird in Zentimeter (cm) angegeben.
c) Raumgewicht (RG): Die Bestimmung erfolgt, wie in ASTM D 3574 - 11 unter Test A beschrieben, durch Messung der Core Density. Das Raumgewicht wird in kg/m³ angegeben.
d) Porosität: Die Gasdurchlässigkeit des Schaums wurde durch eine Staudruckmessung am Schaumstoff ermittelt. Der gemessene Staudruck wird in mm Wassersäule angegeben, wobei niedrigere Staudruckwerte einen offeneren Schaum charakterisieren. Die Werte wurden im Bereich von 0 bis 300 mm gemessen.
   Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.
   Die Messung erfolgt durch Einstellung des Stickstoffvordrucks per Reduzierventil auf 1 bar und Einregeln der Durchflussmenge auf 480 l/h. Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.
   Die Auswertung erfolgt durch Mittelwertbildung über die fünf erhaltenen Messwerte.
e) Stauchhärte CLD, 40 % nach DIN EN ISO 3386-1:2015-10. Die Angabe der Messwerte erfolgt in Kilopascal (kPa).

### Bestimmung der Raumtemperatur-Emission nach dem so genannten Prüfkammertest (PK):

Von den erhaltenen Schäumen wurde die Emission, insbesondere die Katalyse-bedingten Emissionen oder ihrer Zer- oder Umsetzungsprodukte, bei Raumtemperatur in Anlehnung an die DIN-Vorschrift DIN EN ISO 16000-9:2008-04 bestimmt. Die Probenentnahme erfolgte nach 24 Stunden. Hierzu wurden 2 Liter der Prüfkammeratmosphäre mit einer Flussrate von 100 ml/min über ein mit Tenax® TA (mesh35/60) gefülltes Adsorptionsröhrchen gegeben. Im Folgenden wird die Durchführung der Thermodesorption mit anschließender Gaschromatographie/Massenspektrometrie-Kopplung (GC/MS) beschrieben.
a) Messtechnik: Die Thermodesorption wurde mit einem Thermodesorber "TDS2" mit Probenwechsler der Fa. Gerstel, Mülheim, in Verbindung mit einem Agilent 7890/5975 GC/MSD-System durchgeführt.
b) Die Messbedingungen sind in Tabelle 1 und 2 angegeben.

**Tabelle 1: Messparameter Thermodesorption für PK-Messung.**

| | |
|---|---|
| Thermodesorption | Gerstel TDS2 |
| Desorptionstemperatur | 280°C |
| Desorptionsdauer | 5 min |
| Fluss | 65 ml/min |
| Transferline | 280°C |
| Kryofokussierung | KAS 4 |
| Liner | Glasverdampferrohr mit silanisierter |
| | Glaswolle |
| Temperatur | -150°C |

**Tabelle 2: Messparameter Gaschromatographie/Massenspektrometrie für PK-Messung.**

| | |
|---|---|
| GC | Kapillar-GC Agilent 7890 |
| Temperaturprogramm | -150°C; 1 min; 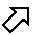 10°C/s; 280°C |
| Säule | Agilent 19091B-115, Ultra 2, 50 m * 0,32 mm dF 0,5µm |
| Fluss | 1,3 ml/min const. Flow |
| Temperaturprogramm | 50°C; 2 min; 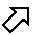 3°C/min; 92°C; 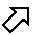 5°C/min; 160°C; 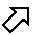 10°e/min; 280°C, 20 min |
| Detektor | Agilent MSD 5975 |
| Auswertung | Auswertung des Totalionenstrom-Chromatrogramms durch Berechnung als Toluoläquivalent |

c) Zur Kalibrierung wurde 2 µl eines Gemisches aus Toluol und Hexadekan in Methanol (je 0,125 mg/ml) auf ein gereinigtes, mit Tenax®TA (mesh35/60) gefülltes Adsorptionsröhrchen gegeben und vermessen (Desorption 5 min; 280°C).

### Weichschaum - Verschäumungsbeispiele

### Beispiel 1: Herstellung von Polyurethanweichschaumstoffen (Weichblockschaum)

Für die anwendungstechnische Ausprüfung der Verbindung der Formel (I) wurden die in Tabelle 3 angegeben Schaumformulierung verwendet.

**Tabelle 3: Formulierung 1 für Weichblockschaum-Anwendungen.**

| Formulierung 1 | Massenteile (pphp) |
|---|---|
| Polyol 1¹⁾ | 100 Teile |
| Wasser | 3,00 Teile |
| Zinn-Katalysator²⁾ | 0,20 Teile |
| Amin | 0,20 Teile |
| TEGOSTAB® BF 2370³⁾ | 0,80 Teile |
| Desmodur® T 80⁴⁾ | 38,1 Teile |

| | |
|---|---|
| ¹⁾Polyol 1: Glycerin-basiertes Polyetherpolyol mit einer OH-Zahl von 48 mgKOH/g. ²⁾KOSMOS® 29, erhältlich bei der Firma Evonik Industries: Zinn(II)-Salz der 2-Ethylhexansäure. ¹⁾Polyethermodifiziertes Polysiloxan. ⁴⁾Toluylendiisocyanat T 80 (80 % 2,4-Isomer, 20 % 2,6-Isomer) der Firma Bayer, 3 mPa·s, 48 % NCO, Funktionalität 2. | |

Bei der Verschäumung wurden 500 g Polyol eingesetzt; die anderen Formulierungsbestandteile wurden entsprechend umgerechnet. Dabei bedeutete beispielsweise 1,00 Teil einer Komponente 1,00 g einer Substanz je 100 g Polyol.

Die Durchführung der Verschäumungen erfolgte im Handmischverfahren. Es wurden die Formulierung 1, wie in Tabelle 3 angegeben, mit verschiedenen Amin-Katalysatoren verwendet. Dazu wurden Polyol, konventioneller bzw. erfindungsgemäßer stickstoffhaltiger Katalysator (Amin), Zinn-Katalysator, Wasser und Schaumstabilisator in einen Becher eingewogen und 60 Sekunden bei 1000 U/min vermischt. Nach Zugabe des Isocyanats (TDI) wurde die Reaktionsmischung 7 s bei 2500 U/min verrührt und sofort in eine mit Papier ausgekleidete Kiste (27 cm x 27 cm Grundfläche und 27 cm Höhe) überführt. Zur Beurteilung der katalytischen Eigenschaften wurden die folgenden charakteristischen Parameter bestimmt: Steigzeit, Steighöhe und Rücksacken des Schaumstoffes nach dem Ende der Steigphase (=Rückfall).

Aus den resultierenden Schaumblöcken wurden definierte Schaumkörper ausgeschnitten, welche weiter analysiert wurden. Folgende physikalischen Eigenschaften wurden an Hand der Probenkörper bestimmt: Raumgewicht (RG), Porosität (= Luftdurchlässigkeit) und Stauchhärte CLD (40%).

Die Ergebnisse der Beurteilung der katalytischen Eigenschaften der erfindungsgemäßen stickstoffhaltigen Verbindung nach der Formel (I) sowie der physikalischen Eigenschaften der resultieren Blockweichschaumstoffe sind in Tabelle 4 zusammengestellt. Als Vergleichskatalysatoren nach dem Stand der Technik wurden Triethylendiamin, 33 Gew.-%ige Lösung in Dipropylenglykol (TEGOAMIN® 33, erhältlich bei der Firma Evonik Industries), 2-[2-(Dimethylamino)ethoxy]ethanol (TEGOAMIN®DMEE, erhältlich bei der Firma Evonik Industries) und Bis(2-Dimethylaminoethylether), 70 Gew.-%ige Lösung in Dipropylenglykol (TEGOAMIN® BDE, erhältlich bei der Firma Evonik Industries) eingesetzt. Es wurden jeweils 0,20 pphp (= Gewichtsteile bezogen auf 100 Gewichtsteile Polyol) Amin eingesetzt.

**Tabelle 4: Ergebnisse der Verschäumungen nach Formulierung 1 (Tabelle 3).**

| Amin | Steigzeit [s] | Rückfall [cm] | Höhe [cm] | RG [kg/m³] | Porosität [mm]¹⁾ | CLD 40 % [kPa] |
|---|---|---|---|---|---|---|
| TEGOAMIN® 33 | 119 | 0,2 | 28,9 | 31,2 | 18 | 4,1 |
| TEGOAMIN® DMEE | 133 | 0,1 | 28,1 | 30,9 | 13 | 3,7 |
| TEGOAMIN® BDE | 92 | 0,5 | 28,3 | 30,8 | 10 | 3,4 |
| FORMEL (I) | 98 | 0,6 | 28,2 | 31,0 | 13 | 3,4 |

| | | | | | | |
|---|---|---|---|---|---|---|
| ¹⁾ = (Staudruck in mm Wassersäule). | | | | | | |

Wie der Tabelle 4 entnommen werden kann, zeigt die erfindungsgemäße Verbindung der Formel (I) eine hohe katalytische Aktivität und Selektivität bezüglich der Treib-Reaktion, was am Vergleich mit dem ausgewogenen TEGOAMIN® 33 zu erkennen ist. Die starke Selektivität Aktivität der Katalyse in Bezug auf die Treib-Reaktion ist nahezu vergleichbar mit der TEGOAMIN® BDE und erheblich besser gegenüber TEGOAMIN® DMEE. Auch die physikalische Auswertung der resultierenden Schäume zeigt, beispielsweise hinsichtlich der Offenzelligkeit, dass es sich bei der Verbindung nach der Formel (I) um einen hochselektiven und hochaktiven Treib-Katalysator handelt.

### Beispiel 2: Emissionen von Polyurethanblockweichschaumstoffen

Um den Einfluss der Verbindung nach der Formel (I) auf die Schaumemissionen zu untersuchen, wurde für die in Tabelle 5 angegebene Schaumformulierung verwendet, die ein emissionsarmes Polyol und einen emissionsarmen Zinn-Katalysator enthält.

**Tabelle 5: Formulierung 2, Schaum-Emissionen in Weichblockschaum-Anwendungen.**

| Formulierung 2 | Massenteile (pphp) |
|---|---|
| Polyol 1¹⁾ | 100 Teile |
| Wasser | 3,00 Teile |
| Zinn-Katalysator²⁾ | 0,60 Teile |
| Amin | 0,15 Teile |
| TEGOSTAB® BF 2370³⁾ | 0,80 Teile |
| Desmodur® T 80⁴⁾ | 41,6 Teile |

| | |
|---|---|
| ¹⁾Polyol 1: Emissionsarmes Glycerin-basiertes Polyetherpolyol mit einer OH-Zahl von 56 mgKOH/g. ²⁾KOSMOS® EF, erhältlich bei der Firma Evonik Industries: Zinn(II)-Salz der Rizinolsäure. ³⁾Polyethermodifiziertes Polysiloxan. ⁴⁾Toluylendiisocyanat T 80 (80 % 2,4-Isomer, 20 % 2,6-Isomer) der Firma Bayer, 3 mPa·s, 48 % NCO, Funktionalität 2. | |

Bei der Verschäumung wurden 500 g Polyol eingesetzt; die anderen Formulierungsbestandteile wurden entsprechend umgerechnet. Dabei bedeutete beispielsweise 1,00 Teil einer Komponente 1,00 g einer Substanz je 100 g Polyol.

Die Durchführung der Verschäumungen erfolgte im Handmischverfahren. Es wurden die Formulierung 2, wie in Tabelle 5 angegeben, mit verschiedenen Amin-Katalysatoren verwendet. Dazu wurden emissionsarmes Polyol, konventioneller bzw. erfindungsgemäßer stickstoffhaltiger Katalysator (Amin), emissionsarmer Zinn-Katalysator, Wasser und Schaumstabilisator in einen Becher eingewogen und 60 Sekunden bei 1000 U/min vermischt. Nach Zugabe des Isocyanats (TDI) wurde die Reaktionsmischung 7 s bei 2500 U/min verrührt und sofort in eine mit Papier ausgekleidete Kiste (27 cm x 27 cm Grundfläche und 27 cm Höhe) überführt und der resultierende Schaum nach dem Abblasen mit Polyethylen-Folie luftdicht verschlossen. Nach einer Aushärtungsphase von 24 Stunden wurde aus dem resultierenden Schaumblock ein definierter Schaumwürfel (7 cm x 7 cm x 7 cm) herausgeschnitten, welcher vollständig mit Aluminiumfolie umschlossen und weiterhin mit Polyethylen-Folie versiegelt wurde.

Das Emissionsverhalten der zuvor beschriebenen Schäume wurde im Anschluss bei Raumtemperatur nach dem Prüfkammertest in Anlehnung an die DIN-Vorschrift DIN EN ISO 16000-9:2008-04, wie oben beschrieben, untersucht. Die Ergebnisse sind in Tabelle 6 wiedergegeben.

**Tabelle 6: Emissionen der Blockweichschaumstoffe nach Formulierung 2 (Tabelle 5).**

| | Gehalt an flüchtigen organischen Verbindungen nach dem Prüfkammer-Test | |
|---|---|---|
| Amin | PK_{ges}¹⁾ [µg/m³] | PK_{Amin}¹⁾ [µg/m³] |
| TEGOAMIN® 33 | 93 | 61 |
| TEGOAMIN® DMEE | 27 | < 10 |
| TEGOAMIN® BDE | 292 | 260 |
| FORMEL (I) | < 20 | < 10 |

| | | |
|---|---|---|
| ¹⁾ PK_{ges} = Gesamtemission; PK_{Amin} = Emissionen aller flüchtigen Amine oder Aminbestandteile im Prüfkammertest. | | |

Tabelle 6 zeigt, dass die Amin-Emissionen überraschend bei Verwendung der Verbindung nach der Formel (I) im Vergleich zu unreaktiven Aminen wie TEGOAMIN® BDE oder TEGOAMIN® 33 reduziert werden können und ähnliche Werte erhalten werden wie mit einbaubaren, VOC-optimierten Aminen wie TEGOAMIN® DMEE. Insbesondere gegenüber dem Einsatz von TEGOAMIN® BDE können also durch alternative Verwendung der Verbindung nach der Formel (I) Polyurethanblockweichschaumstoffe mit deutlich reduzierten Amin-Emissionen hergestellt werden, in diesem Fall sogar Schaumstoffe frei oder nahezu frei von Amin-Emissionen erhalten werden. Außerdem kann, wie aus Tabelle 4 (Beispiel 1) ersichtlich, durch Verwendung der Verbindung der Formel (I) die Steigzeit gegenüber reaktiven Aminen wie TEGOAMIN® DMEE verkürzt werden, was kombiniert in der Anwendung zur Herstellung von Blockweichschaumstoffen einen erheblichen Vorteil darstellt. Die Verbindung nach der Formel (I) stellt also einen hochaktiven, Treib-selektiven und emissionsarmen Amin-Katalysator dar.

### Beispiel 3: Alterung von Polyurethanblockweichschaumstoffen

Analog zu Beispiel 1 wurden mittels Formulierung 1 (Tabelle 3) Weichblockschaumstoffe für Alterungstests nach der DIN-Norm DIN EN ISO 2440/A1:2009-01 hergestellt. Als Alterungsverfahren wurde hier die trockene Wärmealterung bei 140 °C (Ofen) für 2 Stunden gewählt. Als Probenkörper diente ein Schaumwürfel (10 cm x 10 cm x 5 cm), der zur Berechnung der Stauchhärte CLD, 40 % nach DIN EN ISO 3386-1:2015-10 geeignet war. Zunächst wurde zu Vergleichszwecken anhand eines geeigneten Probenkörpers aus dem gleichen Schaumblock die Stauchhärte vor der Alterung bestimmt. Für die gealterten Probenkörper wurde, wenn möglich, ebenfalls die Stauchhärte bestimmt. Als Vergleichskatalysator nach dem Stand der Technik wurde der emissionsarme Amin-Katalysator 2-[2-(Dimethylamino)ethoxy]ethanol (TEGOAMIN® DMEE, erhältlich bei der Firma Evonik Industries) eingesetzt. Die Ergebnisse sind in Tabelle 7 zusammengestellt.

**Tabelle 7: Veränderung der Stauchhärte von Blockweichschaumstoffen vor und nach trockener Wärmealterung.**

| Amin | CLD 40 % vor Alterung[kPa] | CLD 40 % nach Alterung [kPa] |
|---|---|---|
| TEGOAMIN® DMEE | 3,6 | 2,3 |
| FORMEL (I) | 3,5 | 3,4 |

Tabelle 7 ist zu entnehmen, dass unabhängig vom gewählten Amin-Katalysator, beide Probenkörper vor der trockenen Wärmealterung eine vergleichbare Stauchhärte besaßen. Bei Verwendung der Verbindung nach der Formel (I) wurde auch nach der Wärmealterung keine signifikante Verschlechterung der Stauchhärte beobachtet. Dies war unerwartet, da emissionsarme Katalysatoren in der Regel zu verschlechterten Alterungseigenschaften des Schaums führen. Dies zeigt sich auch am Beispiel des emissionsarmen Katalysators TEGOAMIN® DMEE, wo ein deutlicher Abfall der Stauchhärte nach der Alterung gemessen wurde. Im Falle von TEGOAMIN® DMEE führte die gewählte Wärmealterung sogar zu einer erheblichen Zerstörung der Schaumstruktur. Dies wurde unter Verwendung der Verbindung nach der Formel (I) ebenfalls nicht beobachtet. Die Verbindung nach der Formel (I) stellt also einen hochaktiven, sehr Treib-selektiven, emissionsarmen Amin-Katalysator für die Herstellung von alterungsbeständigen Polyurethanweichschaumstoffen dar.

Die Vorteilhaftigkeit der Erfindung wurde auch bei anderen Schaumtypen, wie Kaltweichschaumstoffe (Block- & Formschaumstoffe) bestätigt.

### Herstellung der erfindungsgemäßen Verbindung nach der Formel (I)

### Synthesebeispiel 1:

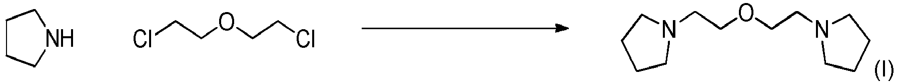

| Chemikalie | CAS | Lieferant |
|---|---|---|
| 2-Chloroethylether, 99% | 111-44-4 | Sigma-Aldrich Chemie GmbH |
| Pyrrolidin, > 99% | 123-75-1 | Sigma-Aldrich Chemie GmbH |

In einem 250 ml Laborautoclaven, ausgestattet mit einer Rührvorrichtung, einem beheizbaren Mantel, Druckabnehmer und Temperatursonde sowie Inertgaszuleitung wurden 26,74 g (0,187 mol) 2-Chloroethylether vorgelegt und mit einer Menge von 120,0 g (1,68 mol) Pyrrolidin versetzt. Nach einer Inertisierung des Laborautoclaven mittels Stickstoff wurde für 12 Stunden auf eine Manteltemperatur von 60 °C erhitzt wobei kein signifikanter Druckanstieg beobachtet werden konnte. Es wurde sodann ein Vakuum von 20 mbar angelegt um nicht umgesetztes Edukt zwecks Desaktivierung zu entfernen. Der Laborautoclav wurde sodann mit Stickstoff gespült und der Reaktionsrückstand einer Feindestillation im Membranpumpenvakuum unterzogen. Nach dem Übergang großer Mengen nicht umgesetzten Pyrrolidins im Vorlauf konnten mit einer Ausbeute von 56% eine Menge von 22,23 g des Produktes in der Zielfraktion bei 15 mbar und einer Kopftemperatur von 161 °C übergetrieben werden. Der Reaktionssumpf, der große Anteile quaternisierter Nebenprodukte enthielt, kristallisierte beim Abkühlen zu einer braunen, salzartigen Masse aus. Die 13C-NMR wie auch GC-MS Analyse der Zielfraktion entsprachen den Erwartungen und bestätigten die Produktbildung.

## Patentansprüche

1. Matratze und/oder Kissen, umfassend mindestens einen Abschnitt aus Polyurethan-Weichschaumstoff, **dadurch gekennzeichnet, dass** der Polyurethan-Weichschaumstoff durch Umsetzung mindestens einer Polyolkomponente und mindestens einer Isocyanatkomponente in Gegenwart der Verbindung der Formel (I) 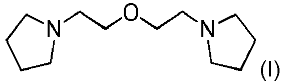 und mindestens eines Treibmittels erhalten wurde.

2. Matratze und/oder Kissen nach Anspruch 1, **dadurch gekennzeichnet, dass** der Polyurethan-Weichschaumstoff ein Polyurethan-Heißweichschaum, ein Polyurethan-Kaltweichschaum oder ein viskoelastischer Polyurethanweichschaum ist, oder dass eine Kombination dieser Weichschaumstoffe verwendet wird.

3. Matratze und/oder Kissen nach Anspruch 1 oder 2, **dadurch gekennzeichnet, dass** der Polyurethan-Weichschaumstoff eine Rückprallelastizität von 1-80 % aufweist, gemessen nach DIN EN ISO 8307:2008-03, und/oder ein Raumgewicht von 5 bis 150 kg/m³ und/oder eine Porosität, ggf. nach Aufdrücken der Schäume, von 1 bis 250, insbesondere 1 bis 50 mm Wassersäule hat.

4. Matratze und/oder Kissen nach einem der Ansprüche 1 bis 3, **dadurch gekennzeichnet, dass** der Polyurethan-Weichschaumstoff eine Stauchhärte CLD, 40 % nach DIN EN ISO 3386-1:2015-10 von 0,1 bis 8,0 kPa aufweist.

5. Matratze und/oder Kissen nach einem der Ansprüche 1 bis 4, **dadurch gekennzeichnet, dass** der Polyurethan-Weichschaumstoff ein Polyurethan-Heißweichschaum ist, und vorzugsweise eine Stauchhärte CLD, 40 % nach DIN EN ISO 3386-1:2015-10 von 2,0 - 8,0 kPa, und/oder eine Rückprallelastizität von 15 - 60 %, gemessen nach DIN EN ISO 8307:2008-03, und/oder ein Raumgewicht von 8 bis 80 kg/m³ und/oder eine Porosität von 1 bis 250, insbesondere 1 bis 50 mm Wassersäule hat.

6. Matratze und/oder Kissen nach einem der Ansprüche 1 bis 4, **dadurch gekennzeichnet, dass** der Polyurethan-Weichschaumstoff ein Polyurethan-Kaltweichschaum ist, und vorzugsweise eine Stauchhärte CLD, 40 % nach DIN EN ISO 3386-1:2015-10 von 2,0-5,0 kPa, insbesondere von 2,5 - 4,5 kPa, und/oder eine Rückprallelastizität von ≥ 55 %, gemessen nach DIN EN ISO 8307:2008-03, und/oder ein Raumgewicht von 25 bis 80 kg/m³ und/oder eine Porosität, vorzugsweise nach Aufdrücken des Schaumes, von 1 bis 250, insbesondere 1 bis 50 mm Wassersäule hat.

7. Matratze und/oder Kissen nach einem der Ansprüche 1 bis 4, **dadurch gekennzeichnet, dass** der Polyurethan-Weichschaumstoff ein viskoelastischer Polyurethanweichschaum ist, und vorzugsweise eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 2,0 kPa, und/oder eine Rückprallelastizität von < 10 %, gemessen nach DIN EN ISO 8307:2008-03, und/oder ein Raumgewicht von 30 bis 130 kg/m³ und/oder eine Porosität, vorzugsweise nach Aufdrücken des Schaumes, von 1 bis 250, insbesondere 1 bis 50 mm Wassersäule hat.

8. Matratze nach einem der Ansprüche 1 bis 7, **dadurch gekennzeichnet, dass** sie eine Höhe von mindestens 1 cm bis maximal 50 cm aufweist, sowie eine Breite von mindestens 20 cm bis maximal 300 cm, vorzugsweise mindestens 70 cm bis maximal 200 cm, sowie eine Länge von mindestens 20 cm bis maximal 300 cm, vorzugsweise von mindestens 150 cm bis maximal 220 cm.

9. Matratze nach einem der Ansprüche 1 bis 8, **dadurch gekennzeichnet, dass** sie als Mehrzonen-Matratze ausgebildet ist.

10. Matratze nach einem der Ansprüche 1 bis 9, **dadurch gekennzeichnet, dass** sie über ihre Fläche verteilt verschiedene Härtezonen aufweist, die insbesondere durch Einschnitte und/oder Hohlräume in der Matratze gebildet sind.

11. Matratze nach einem der vorherigen Ansprüche, wobei es sich bei der Matratze um eine Kaltschaummatratze, eine viskoelastische Matratze, eine Gelschaum-Matratze, eine Latexmatratze oder eine Boxspring-Matratze handelt.

12. Verwendung von Polyurethan-Weichschaumstoff in Matratzen und/oder Kissen, insbesondere Matratzen, wobei der Polyurethan-Weichschaumstoff durch Umsetzung mindestens einer Polyolkomponente und mindestens einer Isocyanatkomponente in Gegenwart der Verbindung der Formel (I) 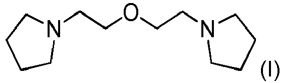 erhalten wurde.

13. Verwendung nach Anspruch 12 zur Bereitstellung von Matratzen und/oder Kissen mit verbesserter Alterungsbeständigkeit und verbessertem Emissionsverhalten.

## Claims

1. Mattress and/or cushion comprising at least one section of flexible polyurethane foam, **characterized in that** the flexible polyurethane foam has been obtained by reaction of at least one polyol component and at least one isocyanate component in the presence of the compound of the formula (I) 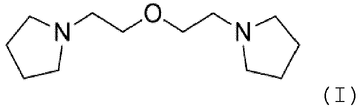 and at least one blowing agent.

2. Mattress and/or cushion according to Claim 1, **characterized in that** the flexible polyurethane foam is a hot-cured flexible polyurethane foam, a high-resilience flexible polyurethane foam or a viscoelastic flexible polyurethane foam, or **in that** a combination of these flexible foams is used.

3. Mattress and/or cushion according to Claim 1 or 2, **characterized in that** the flexible polyurethane foam has a rebound resilience of 1-80%, measured in accordance with DIN EN ISO 8307:2008-03, and/or a foam density of from 5 to 150 kg/m³ and/or a porosity, optionally after pressing open the foams, of from 1 to 250, in particular from 1 to 50 mm water column.

4. Mattress and/or cushion according to any of Claims 1 to 3, **characterized in that** the flexible polyurethane foam has a compressive strength CLD, 40% in accordance with DIN EN ISO 3386-1:2015-10 of from 0.1 to 8.0 kPa.

5. Mattress and/or cushion according to any of Claims 1 to 4, **characterized in that** the flexible polyurethane foam is a hot-cured flexible polyurethane foam and preferably has a compressive strength CLD, 40% in accordance with DIN EN ISO 3386-1:2015-10 of 2.0 - 8.0 kPa, and/or a rebound resilience of 15-60%, measured in accordance with DIN EN ISO 8307:2008-03, and/or a foam density of from 8 to 80 kg/m³ and/or a porosity of from 1 to 250, in particular from 1 to 50 mm water column.

6. Mattress and/or cushion according to any of Claims 1 to 4, **characterized in that** the flexible polyurethane foam is a high-resilience flexible polyurethane foam and preferably has a compressive strength CLD, 40% in accordance with DIN EN ISO 3386-1:2015-10, of 2.0 - 5.0 kPa, in particular 2.5 - 4.5 kPa, and/or a rebound resilience of ≥ 55%, measured in accordance with DIN EN ISO 8307:2008-03, and/or a foam density of 25 to 80 kg/m³ and/or a porosity, preferably after pressing open the foam, of from 1 to 250, in particular from 1 to 50 mm water column.

7. Mattress and/or cushion according to any of Claims 1 to 4, **characterized in that** the flexible polyurethane foam is a viscoelastic flexible polyurethane foam and preferably has a glass transition temperature in the range from -20 to +15°C and/or a compressive strength CLD, 40% in accordance with DIN EN ISO 3386-1:2015-10, of 0.1 - 5.0 kPa, in particular 0.5 - 2.0 kPa, and/or a rebound resilience of < 10%, measured in accordance with DIN EN ISO 8307:2008-03, and/or a foam density of from 30 to 130 kg/m³ and/or a porosity, preferably after pressing open the foam, of from 1 to 250, in particular from 1 to 50 mm water column.

8. Mattress according to any of Claims 1 to 7, **characterized in that** it has a height of from at least 1 cm to not more than 50 cm and a width of from at least 20 cm to not more than 300 cm, preferably from at least 70 cm to not more than 200 cm, and a length of from at least 20 cm to not more than 300 cm, preferably from at least 150 cm to not more than 220 cm.

9. Mattress according to any of Claims 1 to 8, **characterized in that** it is configured as multizone mattress.

10. Mattress according to any of Claims 1 to 9, **characterized in that** it has different hardness zones distributed over its area, which are formed, in particular, by cuts and/or hollow spaces in the mattress.

11. Mattress according to any of the preceding claims, wherein the mattress is a high-resilience foam mattress, a viscoelastic mattress, a gel-foam mattress, a latex mattress or a box-spring mattress.

12. Use of flexible polyurethane foam in mattresses and/or cushions, in particular mattresses, wherein the flexible polyurethane foam has been obtained by reaction of at least one polyol component and at least one isocyanate component in the presence of the compound of the formula (I)

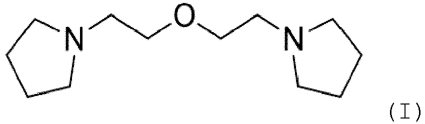

13. Use according to Claim 12 for providing mattresses and/or cushions having improved ageing resistance and improved emission behaviour.

## Revendications

1. Matelas et/ou coussin, comprenant au moins une section en mousse souple de polyuréthane, caractérisé(s) en ce que la mousse souple de polyuréthane a été obtenue par transformation d'au moins un composant polyol et d'au moins un composant isocyanate en présence du composé de formule (I) 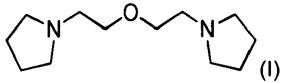 et d'au moins un agent gonflant.

2. Matelas et/ou coussin selon la revendication 1, caractérisé(s) en ce que la mousse souple de polyuréthane est une mousse souple à chaud de polyuréthane, une mousse souple à froid de polyuréthane ou une mousse souple viscoélastique de polyuréthane ou en ce qu'une combinaison de ces mousses souples est utilisée.

3. Matelas et/ou coussin selon la revendication 1 ou 2, caractérisé(s) en ce que la mousse souple de polyuréthane présente une élasticité de rebondissement de 1-80%, mesurée selon la norme DIN EN ISO 8307:2008-03, et/ou un poids spécifique de 5 à 150 kg/m³ et/ou une porosité, le cas échéant après écrasement de la mousse, de 1 à 250, en particulier de 1 à 50 mm de colonne d'eau.

4. Matelas et/ou coussin selon la revendication 1 à 3, caractérisé(s) en ce que la mousse souple de polyuréthane présente une résistance à la compression CLD, 40% selon la norme DIN EN ISO 3386-1:2015-10 de 0,1 à 8,0 kPa.

5. Matelas et/ou coussin selon la revendication 1 à 4, caractérisé(s) en ce que la mousse souple de polyuréthane est une mousse souple à chaud de polyuréthane et présente de préférence une résistance à la compression CLD, 40% selon la norme DIN EN ISO 3386-1:2015-10 de 2,0-8,0 kPa et/ou une élasticité de rebondissement de 15-60%, mesurée selon la norme DIN EN ISO 8307:2008-03, et/ou un poids spécifique de 8 à 80 kg/m³ et/ou une porosité de 1 à 250, en particulier de 1 à 50 mm de colonne d'eau.

6. Matelas et/ou coussin selon la revendication 1 à 4, caractérisé(s) en ce que la mousse souple de polyuréthane est une mousse souple à froid de polyuréthane et présente de préférence une résistance à la compression CLD, 40% selon la norme DIN EN ISO 3386-1:2015-10 de 2,0-5,0 kPa, en particulier de 2,5-4,5 kPa, et/ou une élasticité de rebondissement ≥ 55%, mesurée selon la norme DIN EN ISO 8307:2008-03, et/ou un poids spécifique de 25 à 80 kg/m³ et/ou une porosité, de préférence après écrasement de la mousse, de 1 à 250, en particulier de 1 à 50 mm de colonne d'eau.

7. Matelas et/ou coussin selon la revendication 1 à 4, caractérisé(s) en ce que la mousse souple de polyuréthane est une mousse souple viscoélastique de polyuréthane et présente de préférence une température de transition vitreuse entre -20 et +15°C et/ou une résistance à la compression CLD, 40% selon la norme DIN EN ISO 3386-1:2015-10 de 0,1-5,0 kPa, en particulier de 0,5-2,0 kPa, et/ou une élasticité de rebondissement < 10%, mesurée selon la norme DIN EN ISO 8307:2008-03, et/ou un poids spécifique de 30 à 130 kg/m³ et/ou une porosité, de préférence après écrasement de la mousse, de 1 à 250, en particulier de 1 à 50 mm de colonne d'eau.

8. Matelas selon l'une quelconque des revendications 1 à 7, **caractérisé en ce qu'**il présente une hauteur d'au moins 1 cm à au maximum 50 cm, ainsi qu'une largeur d'au moins 20 cm à au maximum 300 cm, de préférence d'au moins 70 cm à au maximum 200 cm ainsi qu'une longueur d'au moins 20 cm à au maximum 300 cm, de préférence d'au moins 150 cm à au maximum 220 cm.

9. Matelas selon l'une quelconque des revendications 1 à 8, **caractérisé en ce qu'**il est formé sous forme de matelas à zones multiples.

10. Matelas selon l'une quelconque des revendications 1 à 9, **caractérisé en ce qu'**il présente des zones de dureté différente, réparties sur sa surface, qui sont en particulier formées par des découpes et/ou des espaces creux dans le matelas.

11. Matelas selon l'une quelconque des revendications précédentes, le matelas étant un matelas en mousse à froid, un matelas viscoélastique, un matelas en gel-mousse, un matelas en latex ou un matelas Boxspring.

12. Utilisation d'une mousse souple de polyuréthane dans des matelas et/ou des coussins, en particulier des matelas, la mousse souple de polyuréthane ayant été obtenue par transformation d'au moins un composant polyol et d'au moins un composant isocyanate en présence du composé de formule (I)

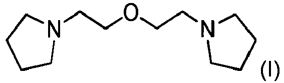

13. Utilisation selon la revendication 12 pour la fabrication de matelas et/ou de coussins présentant une résistance améliorée au vieillissement et un comportement d'émission amélioré.
